# EUROPÄISCHE PATENTSCHRIFT

(11) **EP 2 982 231 B1**
(45) Veröffentlichungstag und Bekanntmachung des Hinweises auf die Patenterteilung: **10.07.2019**
(21) Anmeldenummer: 15401079.7
(22) Anmeldetag: 03.08.2015
(51) Int. Cl.: A01C 7/20

(54) **SÄMASCHINE MIT MEHREREN SÄSCHARREIHEN**
SEEDER WITH MULTIPLE COULTER ROWS
SEMOIR AVEC PLUSIEURS SOCS ÉCHÉLONNÉS

(30) Priorität: 05.08.2014 DE 102014111088
(43) Veröffentlichungstag der Anmeldung: 10.02.2016
(73) Patentinhaber: Amazonen-Werke H. Dreyer GmbH & Co. KG, 49205 Hasbergen (DE)
(72) Erfinder: SCHRÖDER, Olaf, 27798 Hude (DE); HELMS, Helge, 26125 Oldenburg (DE)

(56) Entgegenhaltungen:
- EP-A1- 1 391 147
- EP-A1- 2 361 491
- EP-A2- 1 090 540
- WO-A1-2012/110992
- DE-A1-102012 020 063

## Beschreibung

Die Erfindung betrifft eine Sämaschine mit den Merkmalen des Oberbegriffs von Anspruch 1.

Eine derartige Sämaschine ist beispielsweise in der DE 19947867 A1 offenbart.

Bei dieser Sämaschine sind mehrere Einscheibensäschare in zwei bezüglich der Fahrtrichtung hintereinander liegenden Säscharreihen angeordnet. Die Säschare der beiden Reihen sind an der Maschine alternierend über kurze und lange Lenker an einem gemeinsamen Scharbalken abwechselnd in der hinteren bzw. der vorderen Reihe angeordnet. Jeweils ein oberer und ein unterer Lenker bilden zusammen mit einer über Drehgelenke verbundenen Aufhängung eine Parallelogrammhalterung. In jeder Aufhängung sind ein Säschar und eine als Höhenreferenz dienende Druckrolle drehbar gelagert. Der Höhenversatz zwischen der Druckrolle und dem Säschar gibt die Arbeitstiefe bzw. die Tiefe der Säfurche vor. In die Säfurchen wird anschließend das Saatgut über zwischen den Scheiben der Säschare liegenden Saatgutleitungen eingebracht. Ein geeigneter Schardruck auf die Säschare wird üblicherweise mit einem oder mehreren Federelementen oder einem oder mehreren Hydraulikzylindern aufgebracht. Diese bewirken ein entsprechendes Kraftmoment auf die Lenker, so dass die Säschare in den Boden gedrückt werden.

Die Arbeitstiefe der Säschare wird dabei durch eine Verdrehung des Scharbalkens eingestellt. Dadurch verschieben sich die horizontal verlaufenden Lenker gegeneinander und verkippen so die Aufhängungen der Druckrollen und der Säschare. Durch die Verkippung ändert sich auch der Höhenversatz zwischen den Druckrollen und den Säscharen und somit die Arbeitstiefe.

Nachteilig dabei ist, dass die horizontal verlaufenden Lenker der kurzen und langen Parallelogrammhalterungen nach einer Verdrehung eine unterschiedlich starke Kraft auf die Säschare ausüben. Dadurch kommt es zu einem unterschiedlich hohen Schardruck in den beiden Säscharreihen, wodurch die Säschare unterschiedlich tiefe Säfurchen erzeugen.

Die EP 2361491 A1 offenbart eine Sämaschine mit einem Verstellmechanismus für die Säschare, der einen geringeren Platzbedarf erfordert.

Aufgabe der vorliegenden Erfindung ist es, eine Sämaschine mit wenigstens zwei in Fahrtrichtung hintereinander liegenden Säscharreihen bereitzustellen, bei der ein gleichmäßiger Schardruck der beiden Reihen gewährleistet ist.

Zur Lösung dieser Aufgabenstellung stellt die Erfindung eine Sämaschine mit den Merkmalen des Anspruchs 1 bereit. Vorteilhafte Ausführungsformen sind in den Unteransprüchen genannt.

Es hat sich herausgestellt, dass der unterschiedlich hohe Schardruck der beiden Säscharreihen von einem Winkelfehler herrührt, der zwischen den kurzen und langen Lenkern der beiden Reihen bei einer Verdrehung des Scharbalkens entsteht. Dadurch, dass die Säschare der beiden Reihen auf dem gleichen Höhenniveau gegenüber dem gemeinsamen Scharbalken liegen, verlaufen die kurzen Lenker der vorderen Reihe in einem steileren Winkel zum Boden als die langen Lenker der hinteren Reihe. Dadurch wird das Drehmoment der Schardruckverstellung unterschiedlich stark auf die Aufhängungen der vorderen bzw. hinteren Säschare übertragen und ändert sich bei einer Höhenverstellung des Scharbalkens ungleichmäßig.

Dadurch, dass der Scharbalken höhenverstellbar ist, können die unterschiedlich langen Lenker so eingestellt werden, dass diese im Wesentlichen unabhängig von der Einstellung der Arbeitstiefe zueinander parallel verlaufen. Folglich wird auch das Drehmoment der Schardruckverstellung auf die Aufhängungen der Säschare so übertragen, dass diese einen gleichmäßigen Schardruck erzeugen. Dadurch ist sichergestellt, dass die Furchen durch die Säschare der beiden Reihen in gleicher Tiefe erzeugt werden.

Die Sämaschine kann in der Landwirtschaft einsetzbar sein. Die Sämaschine kann an einer Zugmaschine, wie beispielsweise einem Traktor angeordnet sein. Die Sämaschine kann einen Tragrahmen aufweisen, der starr oder über ein Kupplungselement mit der Zugmaschine verbindbar ist. Ferner kann die Sämaschine eine Antriebswelle zur Kopplung mit der Zugmaschine umfassen.

Die Sämaschine kann eine Egge, einen Vorratsbehälter, eine Dosiereinrichtung, Saatgutleitungen, Walzenräder, Packerräder, Striegel oder dergleichen umfassen. Diese können an dem Tragrahmen angeordnet sein. Die Saatgutleitungen können dazu vorgesehen sein, Saatgut aus dem Vorratsbehälter über die Dosiereinrichtung zum Säschar zu führen. Bei der Ausbildung der Säschare als Einscheibensäschare kann jeweils eine Saatgutleitung zwischen den Scheiben eines Säschars enden.

Die Scharanordnung kann die Lenker, eine Aufhängung am zum Scharbalken gegenüberliegenden Ende der Lenker, die Säschare und Rollen umfassen. Durch die Aufhängung können die Säschare gegenüber den Rollen in einer festen geometrischen Anordnung angeordnet sein. Die Rollen können als Referenz für die Arbeitstiefe der Säschare ausgebildet sein. Die Rollen können als Walzenräder, Packerräder und/oder Druckrollen ausgebildet sein. Die Rollen können gemeinsam mit den Säscharen drehbar an der Aufhängung gelagert sein.

Bei den hintereinander liegenden Säscharreihen können die Säschare alternierend angeordnet sein. Anders ausgedrückt können die Säschare in Richtung quer zur Fahrtrichtung abwechselnd einer der beiden Säscharreihen zugeordnet sein. Dadurch ergibt sich eine besonders kompakte Anordnung der Säschare.

"Unterschiedlich lange Lenker" kann hier bedeuten, dass die Lenker einer Säscharreihe jeweils die gleiche Länge aufweisen und dass die Lenker verschiedener Reihen unterschiedlich lang sind. Die Lenker können sich horizontal gegenüber der Fahrtrichtung nach hinten erstrecken. Horizontal kann hier bedeuten, dass dies die Richtung ist, die im Wesentlichen parallel zur Erdoberfläche verläuft. Ebenso können die Lenker schräg in einem leichten Winkel gegenüber der horizontalen verlaufen. Leichter Winkel kann hier bedeuten, dass dies ein Winkel in einem Bereich von 0° bis 30°, vorzugsweise in einem Winkel von 0° bis 10° ist. Denkbar ist hier, dass die Lenker der beiden Reihen im Wesentlichen mit demselben Winkel gegenüber der Horizontalen verlaufen. Hier können die Aufhängungen an den kürzeren Lenkern vertikal nach oben länger ausgebildet sein als die Aufhängungen der längeren Lenker. Die Lenker können über Drehgelenke mit dem Scharbalken verbunden sein. Die Drehgelenke können eine Drehachse aufweisen, die im Wesentlichen horizontal und quer zur Fahrtrichtung verläuft. Die Lenker können an zum Scharbalken entgegengesetzten Enden über Drehgelenke mit den Aufhängungen der Säschare verbunden sein. Diese Drehgelenke können ebenfalls eine Drehachse aufweisen, die im Wesentlichen horizontal und quer zur Fahrtrichtung verläuft.

"Verstellung der Arbeitstiefe" kann hier bedeuten, dass eine Position der Säschare gegenüber Rollen verändert wird, die auf der Oberfläche des Erdbodens abrollen. Ebenso kann dies bedeuten, dass die Eindringtiefe der Säschare in den Erdboden verstellt wird.

Der Scharbalken kann eine konstruktiv beliebig geartete Tragstruktur sein, die gegenüber dem Tragrahmen der Sämaschine drehbar gelagert ist und an der die Lenker der Säschare gemeinsam angeordnet sind. Der Scharbalken kann vorzugsweise rohrartig, insbesondere als Vierkantrohr ausgebildet sein.

"Gleichmäßiger Schardruck" kann hier bedeuten, dass der Druck der Säschare auf den Boden unabhängig von der Säscharreihe im Wesentlichen gleich ist. Beispielsweise bedeutet dies bei zwei Säscharreihen, dass die Säschare der vorderen Reihe den gleichen Druck auf den Boden ausüben wie die Säschare der hinteren Reihe.

Der Scharbalken ist entlang einer Kurvenbahn derart verfahrbar, dass sich die Dreh- und Höhenstellung des Scharbalkens beim Verfahren gemeinsam ändert. Dadurch kann die Verstellung besonders einfach aufgebaut werden, da die geeignete Dreh- und Höhenstellung des Scharbalkens gemeinsam einstellbar sind. Anders ausgedrückt gibt die Kurvenbahn an einer bestimmten Einstellposition sowohl eine vorbestimmte Drehstellung als auch eine vorbestimmte Höhenstellung des Scharbalkens vor.

Ein Antrieb kann zur Drehung und/oder Höhenverstellung des Scharbalkens vorgesehen sein. Dadurch kann die Verstellung des Scharbalkens besonders einfach von der Zugmaschine aus erfolgen. Der Antrieb kann elektrisch, hydraulisch oder pneumatische sein. Beispielsweise kann der Antrieb ein Elektromotor oder ein Hydraulikzylinder sein. Alternativ ist denkbar, dass der Antrieb eine Handkurbel ist. Vorzugsweise kann die Einstellung des Scharbalkens mit einer Arretierung gesichert werden.

Gemäß einer Ausführungsform die nicht unter die Erfindung fällt, kann eine Kurvenführung zur Führung des Scharbalkens entlang einer Kurvenbahn vorgesehen sein. Dadurch ist eine besonders genaue Verstellung des Scharbalkens möglich, wobei die Führung an einer bestimmten Position des Scharbalkens sowohl die Dreh- als auch die Höhenstellung vorgibt. Die Kurvenführung kann eine Schiene und einen Läufer umfassen, der an der Schiene gelagert ist. Ebenso kann die Kurvenführung ein bewegbares Blechteil mit einem Langloch und eine feststehende Halterung mit Gleitbolzen umfassen, wobei die Gleitbolzen im Langloch geführt werden. Ebenso können sich das Langloch in der feststehenden Halterung und die Gleitbolzen an dem bewegbaren Blechteil befinden.

Zur Verstellung des Scharbalkens kann ein Antrieb mit einem Zahnrad in eine Verzahnung der Kurvenführung eingreifen. Dadurch ist der Antrieb besonders einfach aufgebaut. Die Verzahnung der Kurvenführung kann an dem Blechteil mit dem Langloch angeordnet sein. Der Antrieb mit dem Zahnrad kann an der feststehenden Halterung angeordnet sein.

Ein Viergelenk ist zur Führung des Scharbalkens entlang der Kurvenbahn vorgesehen. Dadurch ist die Führung des Scharbalkens besonders einfach und verschmutzungsresistent aufgebaut. "Viergelenk" kann hier bedeuten, dass vier starre Glieder über Gelenkverbindungen in einer in sich geschlossenen Kette miteinander verbunden sind. Ein Glied des Viergelenks kann starr mit dem Tragrahmen der Sämaschine verbunden sein oder einen Teil des Tragrahmens bilden. Ein demgegenüber liegendes Glied des Viergelenks kann mit dem Scharbalken direkt verbunden sein und einen Teil von diesem bilden. Das Viergelenk sollte von der Form eines Parallelogramms abweichen. Nur bei einer Abweichung von einem Parallelogramm kommt der erfindungsgemäße Effekt des des Verschiebens auf der gewünschten Bahn zustande.

Ein Antrieb kann zur Verstellung des Scharbalkens entlang der Kurvenbahn direkt mit einem Glied des Viergelenks gekoppelt sein. Dadurch ergibt sich ein besonders geringes Spiel zwischen dem Viergelenk und dem Antrieb. Beispielsweise kann der Antrieb mit einem Glied des Viergelenks direkt gekoppelt sein, das zwischen dem Tragrahmen der Sämaschine und den Lenkern angeordnet ist.

Das Glied des Viergelenks kann als Schenkel eines Hebelelements ausgebildet sein und an einem weiteren Schenkel des Hebelelements kann der Antrieb gekoppelt sein, insbesondere wobei das Hebelelement L- oder T-förmig ist. Dadurch kann der Antrieb in einer besonders günstigen, insbesondere ergonomisch sinnvollen verletzungsamen Position an der Sämaschine angeordnet werden. Ebenso kann die Kraft des Antriebs besonders gut durch die Hebelwirkung des Hebelelements auf das Viergelenk übertragen werden.

Der Antrieb kann ein Linearantrieb sein, der insbesondere als Spindelantrieb, Zahnstangenantrieb oder Hydraulikzylinder ausgebildet ist. Alternativ ist denkbar, dass der Antrieb über ein Zahnrad in das Viergelenk eingreift und/oder als Handkurbel ausgebildet ist. Ferner ist denkbar, dass das Viergelenk eine Arretierung für die Einstellung des Scharbalkens umfasst. Des Weiteren wäre eine Arretierung der Tiefenverstellung über eine in das Stellelement integrierte Sicherung umsetzbar und/oder möglich.

Die Lenker können als Schenkel von Parallelogrammhalterungen ausgebildet sein. Dadurch bewirkt die Drehung des Scharbalkens eine dementsprechende Drehung der Aufhängung der Säschare. Folglich kann die Arbeitstiefe besonders präzise eingestellt werden. Zusätzlich kann mit den Parallelogrammhalterungen der gewünschte Schardruck auf die Säschare mittels eines Federelements in Verbindung mit einem Stellelement, zum Beispiel einem Hydraulikzylinder aufgebracht werden. Die Lenker können vorzugsweise als die horizontal verlaufenden Schenkel der Parallelogrammhalterungen ausgebildet sind. Ferner können im Wesentlichen vertikal verlaufende Tragschenkel der Parallelogrammhalterungen mit dem gemeinsamen Scharbalken verbunden sein. Ebenso können die Aufhängungen der Säschare als den Tragschenkeln gegenüberliegende Aufhängungsschenkel ausgebildet sein.

Weitere Merkmale und Vorteile der Erfindung werden nachfolgend anhand der beispielhaften Fig. erläutert. Dabei zeigt:
- Fig. 1A und 1B: ein prinzipielles Ausführungsbeispiel der Sämaschine in einer seitlichen Ansicht;
- Fig. 2: ein nicht unter die Erfindung fallendes Ausführungsbeispiel einer Sämaschine mit höhenverstellbaren Scharbalken in einer seitlichen Ansicht;
- Fig. 3: eine Detailansicht des höhenverstellbaren Scharbalkens, der Lenker und der Säschare des Ausführungsbeispiels aus der Fig. 2 in einer seitlichen Ansicht;
- Fig. 4: eine weitere Detailansicht wie in der Fig. 3, jedoch bei einer tieferen Arbeitstiefe der Säschare;
- Fig. 5: ein erfindungsgemäßes Ausführungsbeispiel der Verstellung des Scharbalkens in einer Detailansicht;
- Fig. 6: eine weitere Detailansicht wie in der Fig. 5, jedoch bei einer tieferen Arbeitstiefe der Säschare und
- Fig. 7: eine Scharaufhängung nach Fig. 5, jedoch mit einem anders ausgebildeten Höhen- und Tiefenanschlagelement.

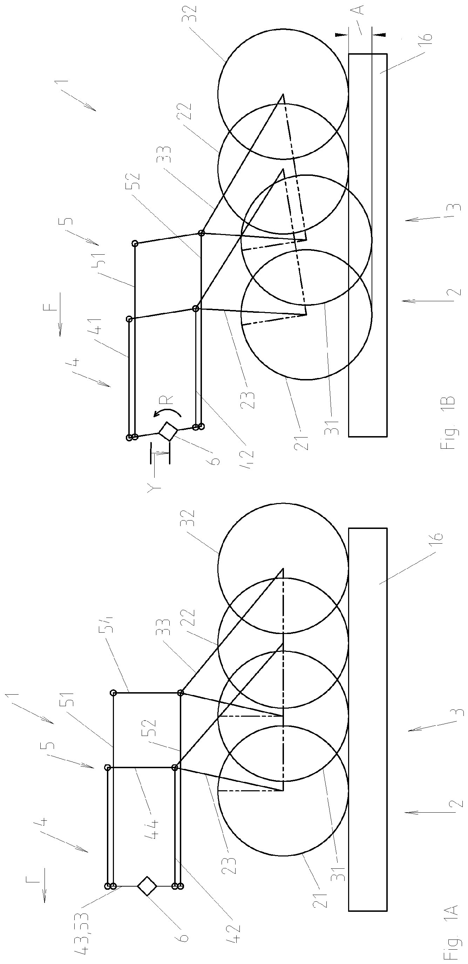

In den Fig. 1A und 1B ist ein prinzipielles Ausführungsbeispiel der Sämaschine 1 in einer seitlichen Ansicht dargestellt. Zu sehen ist die Sämaschine 1 mit zwei in Fahrtrichtung F hintereinander liegenden Säscharreihen 2 und 3, die über den gemeinsamen Scharbalken 6 in der Arbeitstiefe A verstellbar sind. Die vordere Säscharreihe 2 umfasst mehrere in Fahrrichtung F parallel stehende Doppelscheibensäschare 21, die jeweils über die Aufhängung 23 und die erste Parallelogrammhalterung 4 mit dem Scharbalken 6 verbunden sind. Zudem ist an jeder Aufhängung 23 eine Rolle 22 angeordnet, die auf dem Boden 16 abrollt und als Höhenreferenz für die Arbeitstiefe A dient. Die hintere Säscharreihe 3 ist strukturell genauso wie die vordere Säscharreihe 2 aufgebaut und umfasst die Säschare 31, die Rollen 32, die Aufhängungen 33 und die zweiten Parallelogrammhalterungen 5. Allerdings sind die Lenker 51, 52 der zweiten Parallelogrammhalterungen 5 länger ausgebildet, so dass die hinteren Säschare 31 zwischen und hinter den vorderen Säscharen 21 versetzt angeordnet sind, wie dies allgemein bekannt ist. Die ersten und zweiten Parallelogrammhalterungen 4,5 sind also quer zur Fahrtrichtung F abwechselnd am Scharbalken 6 befestigt.

Jede der ersten Parallelogrammhalterungen weist den oberen Lenker 41, den unteren Lenker 42, den Tragschenkel 43 und den Aufhängungsschenkel 44 auf. Diese sind in einer geschlossenen Kette über Drehgelenke an den Enden miteinander verbunden. Die Drehgelenke weisen jeweils eine Drehachse auf, die horizontal und quer zur Fahrtrichtung F verläuft. Bei einer Drehung des Scharbalkens 6 wird der Tragschenkel 43 entsprechend gekippt, wobei durch den oberen und unteren Lenker 41,42 auch der Aufhängungsschenkel 44 mit dem gleichen Winkel geneigt wird. Der Aufhängungsschenkel 44 ist seinerseits feststehend und/oder einstückig mit der Aufhängung 23 verbunden und folglich führt die Drehung des Scharbalkens 6 zu einem geänderten Höhenversatz der Säschare 21 gegenüber den Rollen 22 und somit zu einer anderen Einstellung der Arbeitstiefe A.

Die zweiten Parallelogrammhalterungen 5 arbeiten bei der Einstellung der Arbeitstiefe A genauso wie die zuvor beschriebenen ersten Parallelogrammhalterungen 4.

In der Fig. 1B ist die Scharanordnung aus der Fig. 1A bei einer anderen Einstellung der Arbeitstiefe A gezeigt. Hierzu wird der Scharbalken 6 in Richtung des Pfeils R in der Abbildung gegen den Uhrzeigersinn verdreht und um den Wert (Y) nach unten verstellt. Dadurch sind die oberen Lenker 41,51 gegenüber den unteren Lenkern 42,52 horizontal verschoben, so dass die Säschare 21,31 um die Arbeitstiefe A tiefer angeordnet sind als die dahinterliegenden Rollen 22,32. Folglich greifen die Säschare 21,31 tiefer in den Boden 16 ein und erzeugen so eine tiefere Säfurche.

Zusätzlich zu der Drehung R wird der Scharbalken 6 durch eine hier nicht dargestellte Verstellung um den Betrag Y höhenverstellt. Dies geschieht derart, dass die unterschiedlich langen Lenker 41,51 bzw. 42,52 auch bei der tieferen Arbeitstiefe A parallel zueinander und horizontal verlaufen. Dadurch übertragen die Lenker 41,51,42,52 der ersten und zweiten Parallelogrammhalterungen 4,5 ein Kraftmoment zur Erzeugung des Schardrucks gleichermaßen auf die Aufhängungen 23,33. Es ist also sichergestellt, dass die Säschare 21,31 der beiden Säscharreihen 2,3 mit dem gleichen Druck in den Boden 16 hineingedrückt werden. Der Schardruck wird hier durch ein nicht dargestelltes, zentrales Federelement bzw. einen Hydraulikzylinder zwischen den Tragschenkeln 43,53 und den unteren Lenkern 42,52 aufgebracht.

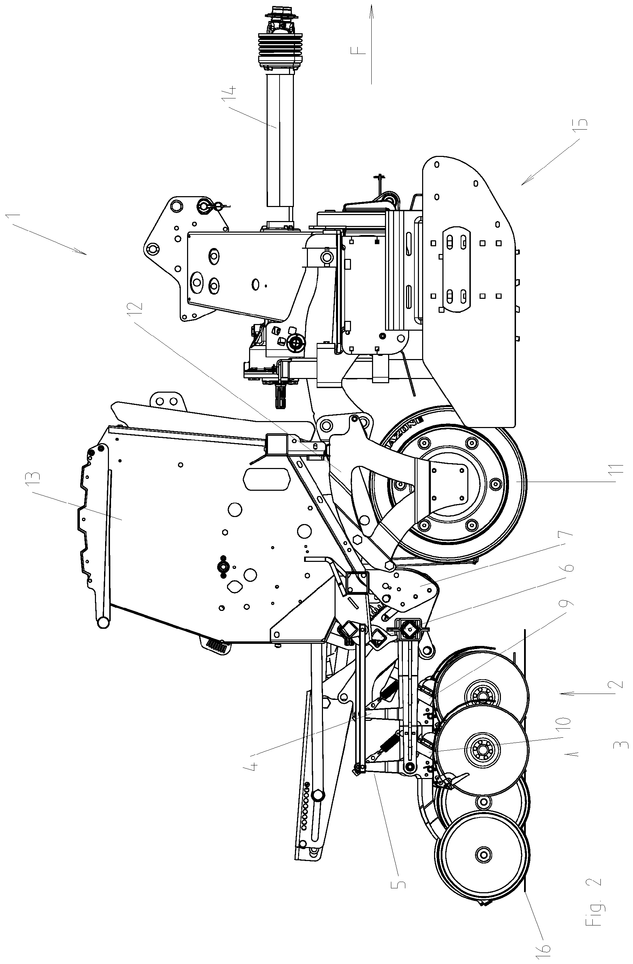

In der Fig. 2 ist ein nicht unter die Erfindung fallendes Ausführungsbeispiel einer Sämaschine 1 mit einem höhenverstellbaren Scharbalken 6 in einer seitlichen Ansicht dargestellt. Zu sehen ist, dass die Sämaschine 1 über die Welle 14 an einen hier nicht dargestellten Traktor angekoppelt wird. Dadurch wird die Sämaschine 1 mit einer entsprechenden Antriebsenergie versorgt. Zunächst wird der Boden mit der Egge 15 zerkleinert und mit dem Packerrad 11 angedrückt. Dadurch entsteht in Fahrtrichtung F hinter dem Packerrad 11 eine gleichmäßig angedrückte Bodenoberfläche.

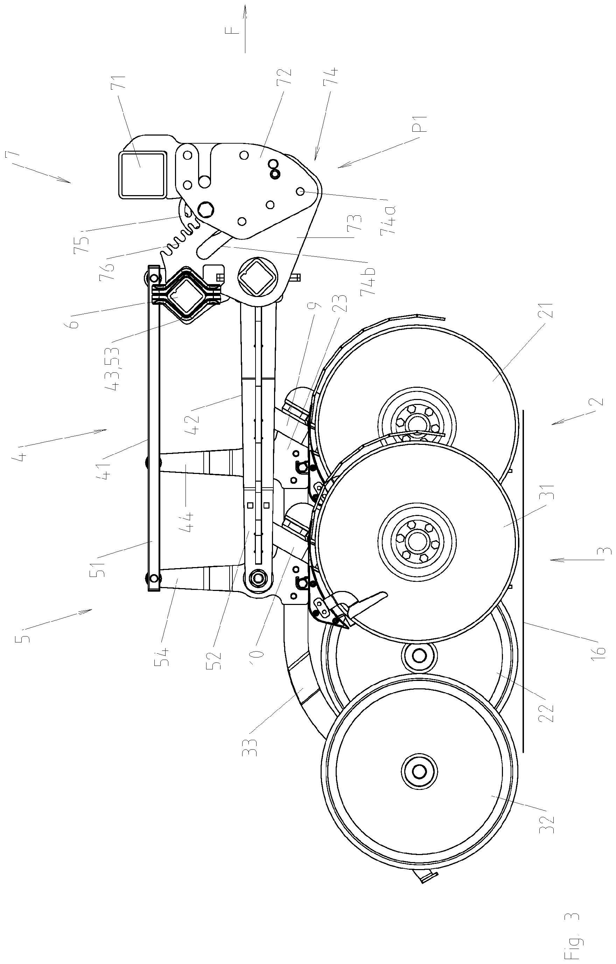

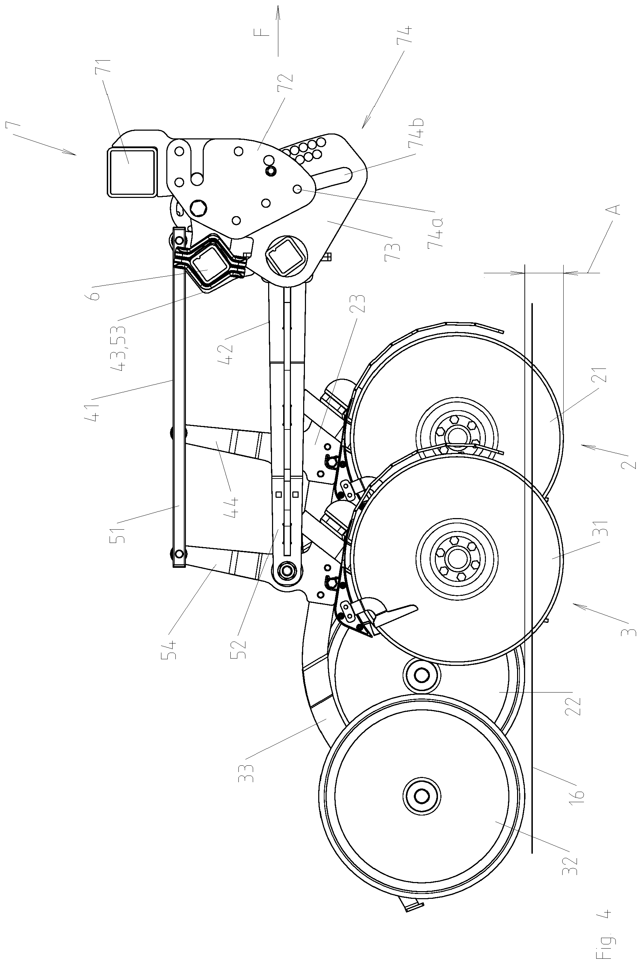

Des Weiteren ist zu sehen, dass die Sämaschine 1 den Vorratsbehälter 13 aufweist, aus dem das dort gespeicherte Saatgut mit einer hier nicht dargestellten Dosiervorrichtung entnommen und mit den Saatgutleitungen 9 und 10 zwischen die Säschare der Reihen 2 und 3 geführt wird. Die Säscharreihen 2 und 3 sind hier über unterschiedlich lange Parallelogrammhalterungen 4 und 5 an dem Tragrahmen 12 der Sämaschine 1 angeordnet. Ansonsten sind die Säschare der Reihen 2 und 3, wie zuvor in Bezug auf die Fig. 1 beschrieben, quer zur Fahrtrichtung F alternierend angeordnet. Zur Verstellung der Arbeitstiefe ist die Verstelleinrichtung 7 vorgesehen, die nachfolgend genauer in Bezug auf die Fig. 3 und 4 erläutert wird.

In den Fig. 3 und 4 ist eine Detailansicht der Scharanordnung aus der Fig. 2 dargestellt. Zu sehen ist der Zentralbalken 71, der als Teil des Tragrahmens 12 der Sämaschine 1 ausgebildet ist (vergleiche Fig. 2). Daran angebunden ist die Verstelleinrichtung 7, die eine Drehung und eine Höhenverstellung des Scharbalkens 6 ermöglicht. Die Drehung des Scharbalkens 6 wird durch die kürzeren Lenker 41,42 der ersten Parallelogrammhalterungen bzw. die längeren Lenker 51,52 der zweiten Parallelogrammhalterungen auf die entsprechenden Aufhängungsschenkel 44,54 übertragen, die feststehend mit den Aufhängungen 23,33 verbunden sind. Dies erlaubt eine weiter unten genauer in Bezug auf die Fig. 4 beschriebene Änderung der Arbeitstiefe A. An den Aufhängungen 23 der vorderen Säscharreihen 2 sind jeweils ein Säschar 21 und eine Rolle 22 hintereinander gelagert. Gleichsam sind an den Aufhängungen 33 der hinteren Säscharreihen 3 jeweils ein Säschar 31 und eine Rolle 32 hintereinander zueinander gelagert. Es ist jedoch auch denkbar, dass die Rollen 22,32 in Fahrtrichtung F vor den Säscharen 21,31 angeordnet sind, wodurch die Rollen 22,32 als Packerrollen dienen können.

Darüber hinaus ist zu sehen, dass die Saatgutleitungen 9,10 zwischen den Scheiben der Säschare 21,31 enden und dort das Saatgut in die geöffnete Furche abgegeben. Die Rollen 22,32 haben hier zusätzlich die Funktion, die Furche nach der Einbringung des Saatguts wieder zu verschließen.

Zur Verstellung des Scharbalkens 6 ist die Kurvenführung 74 in der Verstelleinrichtung 7 vorgesehen. Dazu sind an der feststehenden Halterung 72 der Verstelleinrichtung 7 die Gleitbolzen 74a angeordnet, die eine Führung für das Langloch 74b des bewegbaren Blechteils 73 bilden. Dadurch kann das bewegbare Blechteil 73 entlang der durch die Kurvenführung 74 vorgegebenen Bahn geschwenkt werden. Der Antrieb erfolgt über ein motorisches Antriebselement, wie zum Beispiel Hydraulik-, Pneumatik- oder Elektromotor 75, der mit einem Zahnrad in die Verzahnung 76 des bewegbaren Blechteils 73 eingreift. Dadurch wird der mit dem bewegbaren Blechteil 73 fest verbundene Scharbalken 6 sowohl gedreht als auch höhenverstellt.

In der Fig. 4 ist der Scharbalken 6 gegenüber den Fig. 2 und 3 sowohl gedreht als auch höhenverstellt. Dazu ist das bewegliche Blechteil 73 der Verstelleinrichtung 7 gegenüber der Fig. 3 nach unten geschwenkt. Einerseits wird durch die geänderte Neigung des Scharbalkens 6 die Arbeitstiefe A der Säschare 21, 31 verstellt. Andererseits ist durch die tiefere Lage des Scharbalkens 6 sichergestellt, dass die Lenker 41,51 bzw. 42,52 nach wie vor horizontal angeordnet sind und so das Kraftmoment einer hier nicht dargestellten Feder bzw. eines Hydraulikzylinder in gleicher Weise auf die Säschare 21, 31 der beiden Säscharreihen 2,3 übertragen wird. Dadurch ist der Schardruck beider Säscharreihen 2,3 auf den Boden 16 gleich.

Denkbar ist auch, dass bei der dargestellten Anordnung kein Antrieb über ein motorisches Antriebselement, wie beispielsweise einen Elektromotor erfolgt, sondern durch eine manuelle Handkurbel. Nach der Einstellung der gewünschten Arbeitstiefe kann dann die Verstelleinrichtung 7 über einen Bolzen arretiert werden.

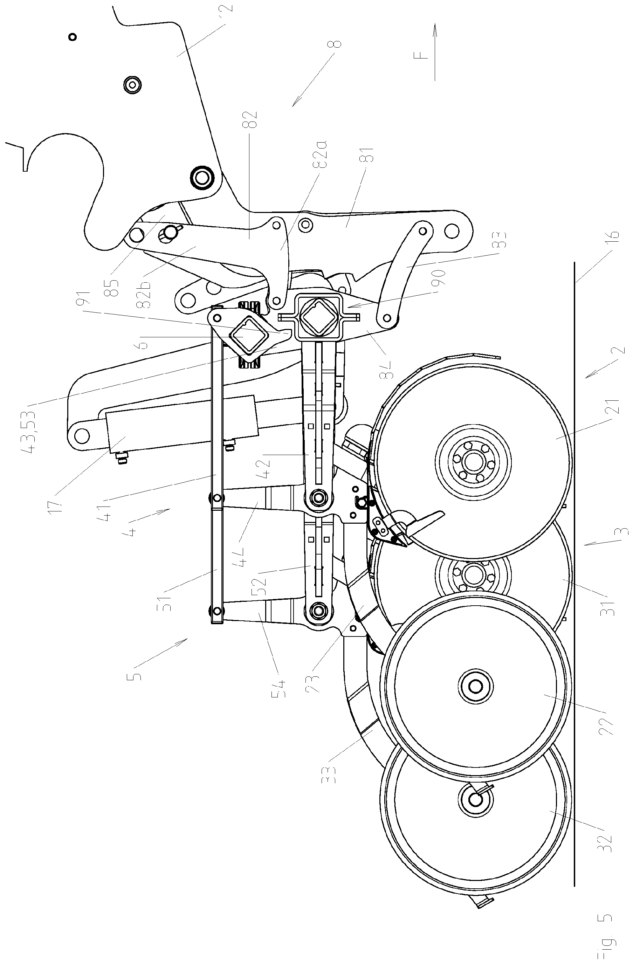

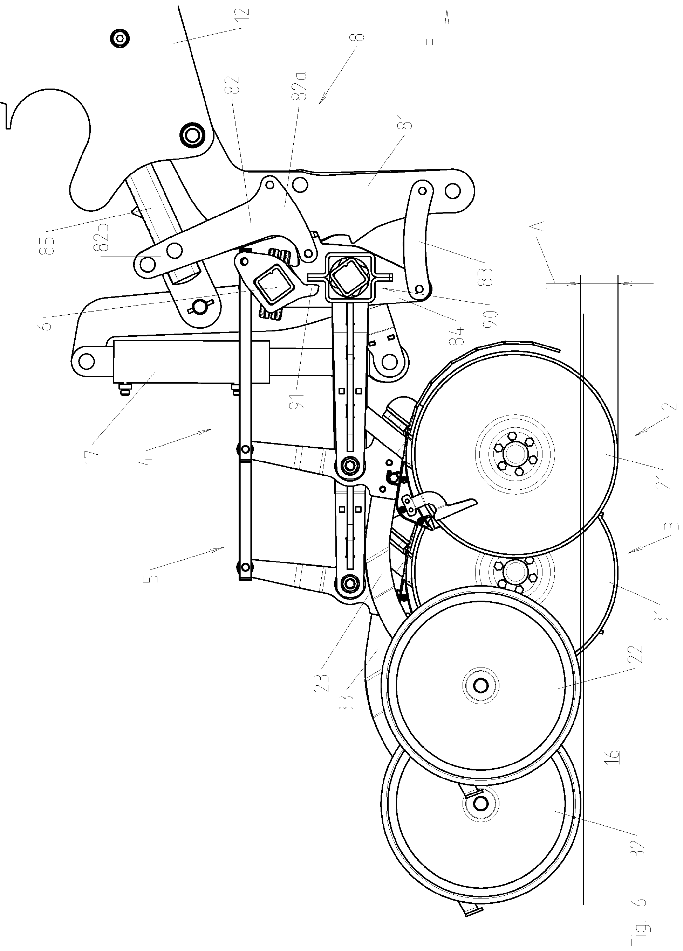

In den Fig. 5 und 6 ist ein erfindungsgemäßes Ausführungsbeispiel der Verstelleinrichtung 8 dargestellt. Das Ausführungsbeispiel unterscheidet sich von dem in den Fig. 2-4 lediglich dadurch, dass anstatt der dort dargestellten Verstelleinrichtung 7 mit einer Kurvenführung 74 eine alternative Verstelleinrichtung 8 mit einem Viergelenk 81 - 84 und dem Linearantrieb 85 eingesetzt wird. Des Weiteren ist in den Fig. 5 und 6 der Hydraulikzylinder 17 zum Aufbringen des Schardrucks dargestellt. Alle übrigen Teile der Scharanordnung unterscheiden sich nicht von den Fig. 2-4, wobei gleiche Elemente mit gleichen Bezugszeichen versehen sind und hier nicht noch einmal beschrieben werden.

Das Viergelenk 81-84 ist durch das feststehende Glied 81 feststehend mit dem Tragrahmen 12 der Sämaschine verbunden. Die beiden drehbaren Glieder 82,83 sind jeweils über entsprechende Gelenke an einem Ende mit dem feststehenden Glied 81 und am anderen Ende mit dem schwenkbaren Glied 84 verbunden. Dadurch, dass die drehbaren Glieder 82,83 unterschiedliche Längen aufweisen, wird das schwenkbare Glied 84 entlang einer vorbestimmten Kurvenbahn geführt. Da auch der Scharbalken 6 starr mit dem schwenkbaren Glied 84 verbunden ist, führt dies zu einer gekoppelten Drehung und Höhenverstellung des Scharbalkens 6.

Die Drehung des Scharbalkens 6 wird, wie zuvor genauer in Bezug auf die Fig. 1-4 dargestellt, über die kurzen Lenker 41,42 bzw. die langen Lenker 51,52 auf die entsprechenden Aufhängungen 23,33 der Säscharreihen 2,3 zur Einstellung der Arbeitstiefe A übertragen.

In der Fig. 6 ist die Scharanordnung aus der Fig. 5 bei einer geänderten Arbeitstiefe A dargestellt. Zu sehen ist, dass hier der Linearantrieb 85 ausgefahren ist und eine entsprechende Drehbewegungen des oberen drehbaren Glieds 82 bewirkt. Dies ist hier als L-förmiges Hebelelements ausgebildet. Dadurch wirkt der längere Schenkel 82b einerseits als Übersetzungshebel auf den dazu senkrechten Schenkel 82a und andererseits kann der Linearantrieb 85 in einer besonders günstigen Lage am Tragrahmen 12 angebracht werden. Der Linearantrieb 85 ist hier als Spindelantrieb oder Hydraulikzylinder ausgebildet. Denkbar ist auch, dass es sich beim Antrieb nicht um einen Linearmotor sondern um einen Elektromotor mit oder ohne Getriebe handelt.

Da der Antrieb 85 in der Fig. 6 in Fahrtrichtung F nach hinten ausgefahren ist, wird eine entsprechende Drehbewegung auf das Glied 82 des Viergelenks ein 81-84 ausgeübt, wodurch der Scharbalken 6 gegenüber der Fig. 5 gedreht und nach unten verstellt ist. Dies bewirkt, dass die Säschare 21,31 gegenüber den Rollen 22,32 tiefer in den Boden 16 eindringen und so eine entsprechend tiefere Säfurche geschaffen wird. Gleichzeitig verlaufen die Lenker 41,42,51,52 der Parallelogrammhalterungen 4,5 parallel zueinander bzw. in horizontaler Richtung. Dadurch wird das Kraftmoment des Hydraulikzylinders 17 in gleicher Weise auf die Säschare 21,31 übertragen und es ist damit sichergestellt, dass beide Säscharreihen 2,3 mit dem gleichen Schardruck arbeiten.

Die Sämaschine 1 aus den Fig. 1-6 wird wie folgt eingesetzt: Durch die Antriebe 75,85 wird der Scharbalken 6 gleichzeitig gedreht und höhenverstellt. Die Drehung erfolgt dabei so, dass die gewünschte Arbeitstiefe A eingestellt wird. Die Höhenverstellung erfolgt so, dass die kurzen Lenker 41,42 der vorderen Säscharreihen 2 und die langen Lenker 51,52 der hinteren Säscharreihen 3 unabhängig von der Arbeitstiefe A horizontal verlaufen. Alternativ ist denkbar, dass die Lenker 41,42,51,52 durch eine geeignete Ausführung der Aufhängungen 23, 33 schräg verlaufen, jedoch unabhängig von der Arbeitstiefe A den gleichen Winkel zur Horizontalen einnehmen. Insbesondere ist denkbar, dass die Lenker 41,42,51,52 unabhängig von der Arbeitstiefe A parallel zueinander verlaufen. Dadurch ist sichergestellt, dass die Säscharreihen 2,3 mit dem gleichen Schardruck arbeiten und so die gleiche Furchentiefe erzeugen.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

Im Bereich der Gelenkanordnungen 90 für einen Lenker 42, 52 jeder Parallelogrammhalterungen 4,5 an dem Scharbalken 6 sind an den oberen Scharbalken 6 die in den Fig. 5 und 6 dargestellten Anschlagnasen 91 angeordnet. Diese Anschlagnasen 91 begrenzen den Schwenkweg der 3 nach oben und nach unten.

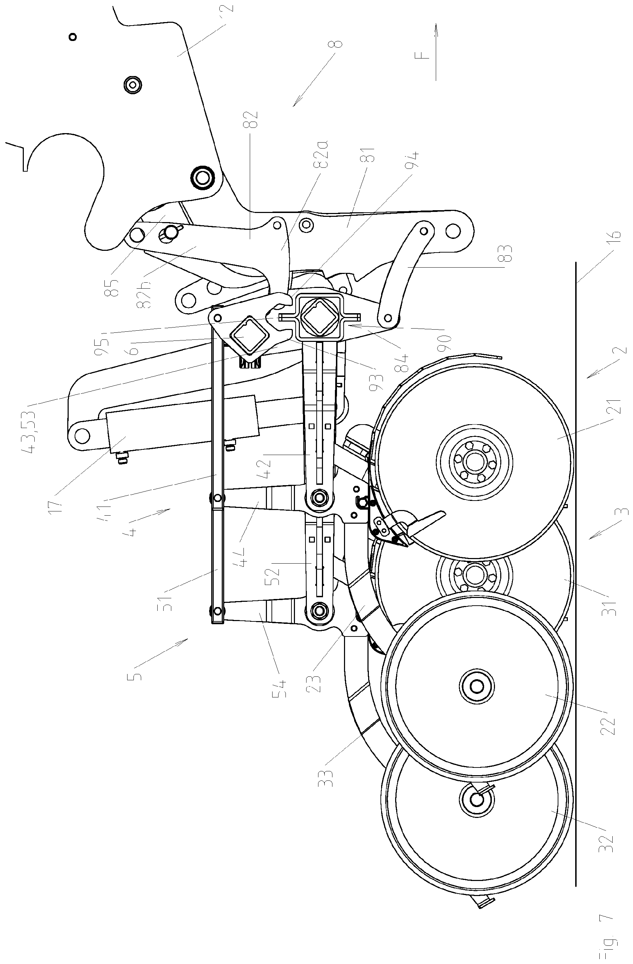

Die Anschlagnasen 92 bei dem Ausführungsbeispiel nach der Fig. 7 bestehen aus U-förmig angeordneten Stegen 93 und 94, die einen an jeder Gelenkanordnung 90 angeordneten Ansatz 95 jeweils übergreifen. Diese Stege 93 und 94 des Ansatzes 95 begrenzen den Schwenkweg der 3 nach oben und nach unten.

## Patentansprüche

1. Sämaschine (1), die eine Scharanordnung mit wenigstens zwei in Fahrtrichtung (F) hintereinander liegenden Säscharreihen (2, 3) aufweist, wobei die Säschare (21, 31) jeder Reihe (2, 3) an einem gemeinsamen, zur Verstellung der Arbeitstiefe (A) drehbaren Scharbalken (6) über unterschiedliche lange Lenker (41, 42, 51, 52) angeordnet sind, wobei der Scharbalken (6) zur Sicherstellung eines bei der Verdrehung (R) des Scharbalkens (6) über die unterschiedlich langen Lenker (41, 42, 51, 52) gleichmäßig erzeugten Schardrucks höhenverstellbar ist, wobei ein Viergelenk (81 - 84) zur Führung des Scharbalkens (6) entlang einer Kurvenbahn vorgesehen ist, **dadurch gekennzeichnet, dass** der Scharbalken (6) entlang der Kurvenbahn derart verfahrbar ist, dass sich die Dreh- und Höhenstellung des Scharbalkens (6) beim Verfahren gemeinsam ändert.

2. Sämaschine (1) nach Anspruch 1, wobei ein Antrieb (85) zur Drehung und/oder Höhenverstellung des Scharbalkens (6) vorgesehen ist.

3. Sämaschine (1) nach Anspruch 1, wobei zur Verstellung des Scharbalkens (6) ein Antrieb (85) direkt mit einem Glied (82) des Viergelenks (81 - 84) gekoppelt ist.

4. Sämaschine (1) nach Anspruch 3, wobei das Glied (82) des Viergelenks (81 - 84) als Schenkel (82a) eines Hebelelements ausgebildet ist und an einem weiteren Schenkel (82b) des Hebelelements der Antrieb (85) gekoppelt ist, insbesondere wobei das Hebelelement L- oder T-förmig ist.

5. Sämaschine (1) nach Anspruch 3 oder 4, wobei der Antrieb (85) ein Linearantrieb ist, der insbesondere als Spindelantrieb, Zahnstangenantrieb oder Hydraulikzylinder ausgebildet ist.

6. Sämaschine (1) nach wenigstens einem der vorangegangenen Ansprüche, wobei die Lenker (41, 42, 51, 52) als Schenkel von Parallelogrammhalterungen (4, 5) ausgebildet sind.

## Claims

1. Seeder (1) which has a coulter arrangement with at least two sowing coulter rows (2, 3) lying one behind another in the direction of travel (F), wherein the sowing coulters (21, 31) of each row (2, 3) are arranged on a common coulter bar (6), which is rotatable in order to adjust the working depth (A), via links (41, 42, 51, 52) of differing length, wherein the coulter bar (6) can be adjusted in height in order to ensure a coulter pressure produced uniformly via the links (41, 42, 51, 52) of differing length during the rotation (R) of the coulter bar (6), wherein a four-bar linkage (81 - 84) is provided for guiding the coulter bar (6) along a curved path, **characterized in that** the coulter bar (6) is movable along the curved path in such a manner that the rotational and height position of the coulter bar (6) jointly changes during the movement.

2. Seeder (1) according to Claim 1, wherein a drive (85) is provided for rotating and/or adjusting the height of the coulter bar (6).

3. Seeder (1) according to Claim 1, wherein, in order to adjust the coulter bar (6), a drive (85) is coupled directly to a member (82) of the four-bar linkage (81 - 84).

4. Seeder (1) according to Claim 3, wherein the member (82) of the four-bar linkage (81 - 84) is designed as a limb (82a) of a lever element, and the drive (85) is coupled to a further limb (82b) of the lever element, in particular wherein the lever element is L- or T-shaped.

5. Seeder (1) according to Claim 3 or 4, wherein the drive (85) is a linear drive which is designed in particular as a spindle drive, rack drive or hydraulic cylinder.

6. Seeder (1) according to at least one of the preceding claims, wherein the links (41, 42, 51, 52) are designed as limbs of parallelogram holders (4, 5).

## Revendications

1. Semoir (1), comportant un agencement de socs avec au moins deux rangées de socs échelonnées (2, 3) situées l'une derrière l'autre dans la direction de la marche (F), dans lequel les socs (21, 31) de chaque rangée (2, 3) sont agencés, par le biais de bielles (41, 42, 51, 52) de longueurs différentes, sur un barreau de soc (6) commun pouvant pivoter pour régler la profondeur de travail (A), dans lequel le barreau de soc (6) est réglable en hauteur pour assurer l'obtention d'une pression de soc uniforme par le biais des bielles (41, 42, 51, 52) de longueurs différentes lors de la rotation (R) du barreau de soc (6), dans lequel est prévu un quadrilatère (81 - 84) pour guider le barreau de soc (6) le long d'une trajectoire courbe, **caractérisé en ce que** le barreau de soc (6) est mobile le long de la trajectoire courbe de telle sorte que la position de rotation et la position en hauteur du barreau de soc (6) varient ensemble pendant le procédé.

2. Semoir (1) selon la revendication 1, dans lequel un entraînement (85) est prévu pour le pivotement et/ou le réglage en hauteur du barreau de soc (6).

3. Semoir (1) selon la revendication 1, dans lequel un entraînement (85) est couplé directement avec un élément (82) du quadrilatère (81 - 84) pour le réglage du barreau de soc (6).

4. Semoir (1) selon la revendication 3, dans lequel l'élément (82) du quadrilatère (81 - 84) est conçu comme branche (82a) d'un élément de levier et est couplé à une autre branche (82b) de l'élément de levier de l'entraînement (85), en particulier dans lequel l'élément de levier est en forme de L ou de T.

5. Semoir (1) selon la revendication 3 ou 4, dans lequel l'entraînement (85) est un entraînement linéaire, qui est en particulier conçu comme entraînement à vis, entraînement à crémaillère ou cylindre hydraulique.

6. Semoir (1) selon au moins une des revendications précédentes, dans lequel les barreaux (41, 42, 51, 52) sont conçus comme branches de supports en parallélogramme (4, 5).
